# EUROPEAN PATENT SPECIFICATION

(11) **EP 4 624 128 B1**
(45) Date of publication and mention of the grant of the patent: **21.10.2026**
(21) Application number: 24898058.3
(22) Date of filing: 25.11.2024
(51) Int. Cl.: B29C 43/02, B29C 43/36, B29C 55/02, H01M 50/105, B29L 31/00, B29C 51/04, B29C 51/08, B29C 51/26, B21D 13/02, B21D 13/10, B21D 37/10, B21D 37/12, B21D 43/04, B21D 11/02, B21D 22/02

(54) **POUCH FORMING DEVICE**
BEUTELFORMVORRICHTUNG
APPAREIL DE MOULAGE DE POCHE

(30) Priority: 28.11.2023 KR 20230167445
(43) Date of publication of application: 01.10.2025
(73) Proprietor: LG Energy Solution, Ltd., Seoul 07335 (KR)
(72) Inventor: JUNG, Woo Jung, Daejeon 34122 (KR)
(74) Representative: Plasseraud IP
(86) International application number: PCT/KR2024/018766
(87) International publication number: WO 2025/116464

(56) References cited:
- JP-A- 2015 511 388
- KR-A- 20120 134 571
- KR-A- 20220 066 469
- KR-A- 20230 029 457
- KR-B1- 100 766 489
- KR-B1- 101 690 733
- KR-B1- 101 690 733
- US-A1- 2023 271 355

## Description

### Technical Field

The present invention relates to a pouch forming device, and more specifically, relates to a pouch forming device capable of forming a cup portion by primarily stretching a preforming region of a pouch sheet, and then secondarily stretching the primarily stretched preforming region.

### Background Art

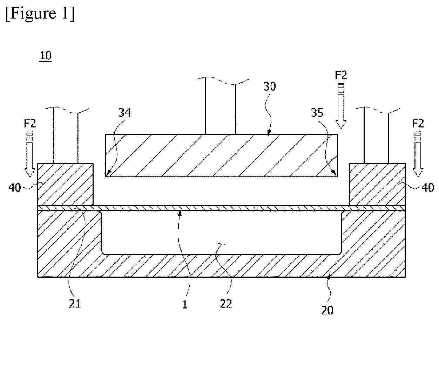

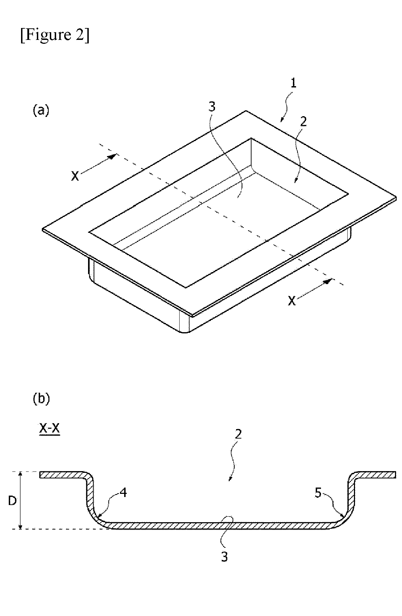

Figure 1 is a configuration diagram of a conventional pouch forming device, and Figure 2(a) is a perspective diagram of a pouch provided with a cup portion formed by a pouch forming device according to a conventional art, and Figure 2(b) is an X-X cross-sectional diagram of Figure 2(a).

The pouch forming device (10) comprises a die part (20) provided with a mold groove (22), a punching block (30) provided to be insertable into the mold groove (22), and a stripper (40) for fixing a pouch sheet (1) on the die upper surface (21) of the die part (20).

Upon formation of a pouch having the cup portion (2), the pouch sheet (1) is seated on the die upper surface (21) to cover the mold groove (22). The pouch sheet (1) is fixed to the die part (20) by the stripper (40).

Next, the punching block (30) can form the cup portion (2) on the pouch sheet (1) by moving in a direction (F2) approaching toward the mold groove (22) and simultaneously stretching the central portion of the pouch sheet (1) into the mold groove (22). The punching block (30) is for forming the cup portion (2), which may have a block shape of approximately a rectangular parallelepiped.

In a manufacturing process of a battery cell, the cup portion (2) of the pouch is a portion where an electrode assembly (not shown) is accommodated. The electrode assembly (not shown) is obtained by sequentially laminating a positive electrode and a negative electrode via a separator.

Depending on the product specifications, the thicker the electrode assembly (not shown), the deeper the forming depth (D) of the cup portion (2). In addition, in the pouch provided with one cup portion (2), the forming depth (D) of the cup portion (2) must be provided at a depth enabling the electrode assembly (not shown) to be accommodated.

When the pouch sheet (1) is stretched by the punching block (30), stress is concentrated on block corner portions (34, 35) of the punching block (30). As shown in Figure 2, cup corner portions (4, 5) of the cup portion (2) in contact with the block corner portions (34, 35) of the punching block (30) can be stretched more excessively than the cup bottom surface (3). Accordingly, the cup corner portions (4, 5) can be stretched to a thickness thinner than the cup bottom surface (3).

As the forming depth (D) of the cup portion (2) deepens, the thickness of the cup corner portions (4, 5) may also become thinner. In addition, the cup corner portions (4, 5) are stretched to a thickness thinner than the cup bottom surface (3), whereby cracks may occur.

The forming depth (D) of the cup portion (2) may be a factor limiting the product specifications of the battery cell, so that a pouch forming device (10) capable of forming cup portions (2) to a forming depth (D) according to product specifications is required.

The document US 2023/271355 discloses a press mold for secondary battery pouch.

### Disclosure

### Technical Problem

The present invention is intended to provide a pouch forming device capable of forming a cup portion by primarily stretching a preforming region of a pouch sheet, and then secondarily stretching the primarily stretched preforming region.

### Technical Solution

The invention is set out in the appended set of claims.

A pouch forming device related to one example of the present invention is for forming a cup portion in a preforming region of a pouch sheet, which comprises a first die part provided with a mold opening and provided so that the pouch sheet is seated for the preforming region to cover the mold opening, a first pressurizing part for fixing the pouch sheet on the first die part, and a stretching part including a first stretching member provided to pressurize a central region of the preforming region of the pouch sheet, and a second stretching member provided to pressurize a first edge region surrounding the central region, wherein the first and second stretching members may be provided to pressurize the central region and the first edge region, respectively, along different directions toward the mold opening.

The second stretching member is provided to simultaneously pressurize a plurality of first points along the circumferential direction of the first edge region.

In one example of the present invention, the second stretching member may be provided such that a first imaginary line connecting the plurality of first points forms a closed curve.

In one example of the present invention, the second stretching member may be provided such that a first imaginary line connecting the plurality of first points has a circular shape having a radius larger than that of the central region.

In one example of the present invention, the second stretching member may be provided such that a first imaginary line connecting the plurality of first points has a polygonal shape.

The second stretching member is provided such that the plurality of first points is spaced apart from the central region at a predetermined interval.

In one example of the present invention, the stretching part may further comprise a third stretching member provided to pressurize a second edge region surrounding the first edge region, and the second stretching member and the third stretching member may be provided to pressurize the first edge region and the second edge region, respectively, along different directions toward the mold opening.

In one example of the present invention, the third stretching member may be provided to simultaneously pressurize a plurality of second points along the circumferential direction of the second edge region.

In one example of the present invention, the third stretching member may be provided such that a second imaginary line connecting the plurality of second points forms a closed curve.

In one example of the present invention, the third stretching member may be provided such that a second imaginary line connecting the plurality of second points has a circular shape having a radius larger than that of the first edge region.

In one example of the present invention, the third stretching member may be provided such that a second imaginary line connecting the plurality of second points has a polygonal shape.

In one example of the present invention, the second stretching member and the third stretching member may be provided so that the first imaginary line and the second imaginary line each have a circular shape.

In one example of the present invention, the second stretching member and the third stretching member may be provided so that the first imaginary line and the second imaginary line each have a polygonal shape.

In one example of the present invention, the pouch forming device may further comprise a control part provided to control movement of the first to third stretching members.

In one example of the present invention, the control part may be provided so that the first and third stretching members simultaneously pressurize the preforming region.

In one example of the present invention, the control part may be provided so that the first to third stretching members simultaneously pressurize the preforming region.

In one example of the present invention, in the first to third stretching members, portions in contact with the preforming region may be formed as curved portions.

In one example of the present invention, the first to third stretching members may have balls rotatably disposed at portions in contact with the preforming region.

The pouch forming device according to one example of the present invention may comprise a second die part provided with a mold groove where the preforming region completely formed through the stretching part is seated, a second pressurizing part for fixing the pouch sheet seated in the second die part, and a punching block provided to be insertable into the mold groove, and may further comprise a punching part provided to stretch the preforming region into the mold groove.

### Advantageous Effects

As discussed above, the pouch forming device related to one example of the present invention has the following effects.

In the conventional pouch forming device, the punching part stretches the pouch sheet into the mold groove to form the cup portion, whereby there has been a problem that stress is concentrated on the cup corner portions of the cup portion, which are portions pressurized by the block corner portions of the punching block, and the thickness of the cup corner portion is stretched thinner than the thickness of the cup bottom surface of the cup portion.

The pouch forming device related to one example of the present invention can form a cup portion by primarily stretching the preforming region of the pouch sheet, in which the cup portion is to be formed, to be curved up and down, and then secondarily stretching the primarily stretched pouch using the punching block.

The pouch forming device can prevent stress from being concentrated on the block corner portion as the block corner portion of the punching block pressurizes the primarily stretched portion.

As a result, the cup portion can be formed with a uniform thickness of the cup bottom surface and the cup corner portion of the cup portion, thereby resolving the stretching imbalance of the conventional cup corner portion.

Also, by resolving the stretching imbalance of the cup corner portion upon formation of the cup portion, it is possible to prevent a thickness decrease of the cup corner portion and occurrence of cracks in the cup corner portion.

In addition, by primarily stretching the preforming region of the pouch sheet to a forming depth according to the final product specifications, and then stretching the primarily stretched pouch into a mold groove having a forming depth, it is possible to form the cup portion.

### Description of Drawings

Figure 1 is a configuration diagram of a conventional pouch forming device.
Figure 2(a) is a perspective diagram of a pouch provided with a cup portion formed by a pouch forming device according to a conventional art, and Figure 2(b) is an X-X cross-sectional diagram of Figure 2(a).
Figure 3 schematically illustrates a configuration diagram of a pouch forming device according to one example of the present invention.
Figure 4 is example diagrams dividing a preforming region of a pouch sheet into a plurality of regions in one example of the present invention.
Figure 5 is arrangement state diagrams of a plurality of stretching members as viewed from the top of a first die part according to the present example, where Figure 5(a) is an arrangement state diagram of a plurality of stretching members having a circular ring cross-section, Figure 5(b) is an arrangement state diagram of a plurality of stretching members having a rectangular ring cross-section, and Figure 5(c) is an arrangement state diagram of a plurality of stretching members having a polygonal ring cross-section.
Figures 6 and 7 are operation state diagrams of a stretching part in one example of the present invention.
Figure 8(a) is a perspective diagram of a primarily stretched pouch according to one example of the present invention, and Figure 8(b) is a Y-Y cross-sectional diagram of Figure 8(a).
Figures 9 and 10 are diagrams for explaining a process of forming a primarily stretched pouch into a pouch provided with a cup portion, where Figure 9 is an arrangement state diagram of a second die part, a second pressurizing part, and a punching part, and Figure 10 is an operation state diagram of a punching part in which a punching block of the punching part is inserted into a mold groove of the second die part.
Figure 11(a) is a perspective diagram of a pouch provided with a cup portion according to one example of the present invention, and Figure 11(b) is a Z-Z cross-sectional diagram of Figure 11(a).

### Mode for Invention

Hereinafter, a pouch forming device according to one example of the present invention will be described with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

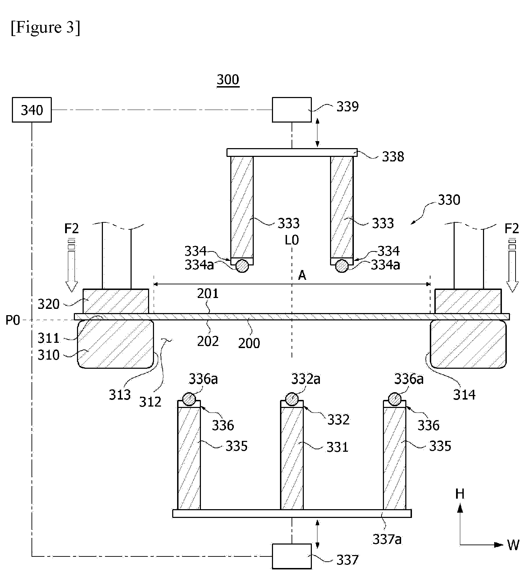

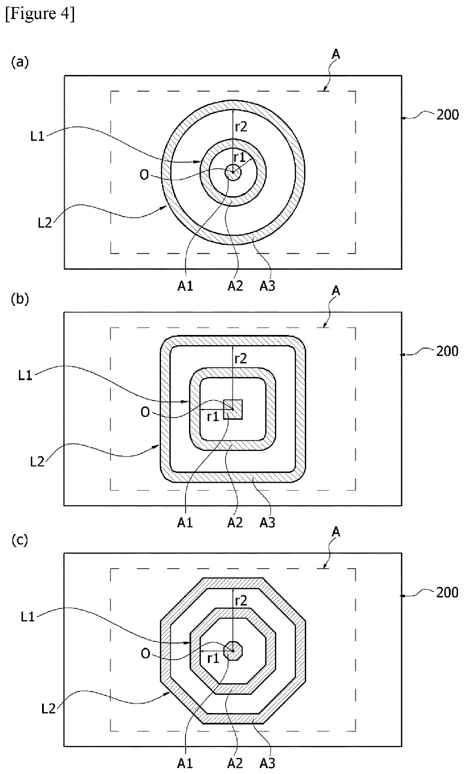

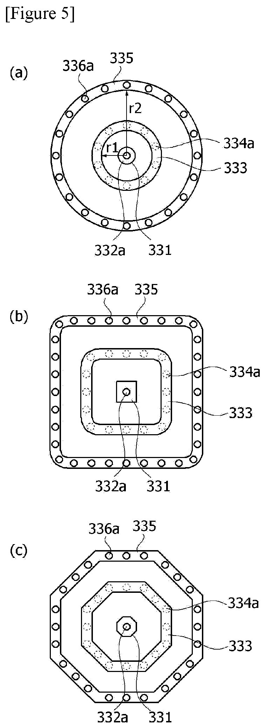

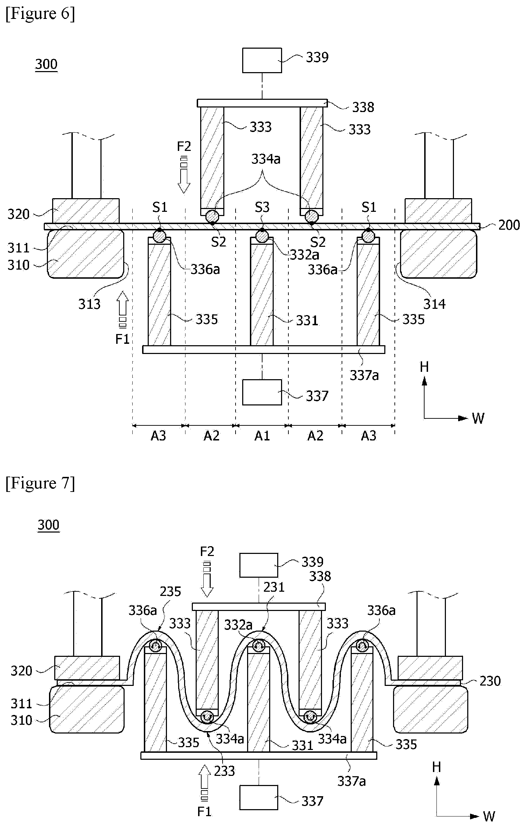

Figure 3 schematically illustrates a configuration diagram of a pouch forming device according to one example of the present invention, Figure 4 is example diagrams dividing a preforming region of a pouch sheet into a plurality of regions in one example of the present invention, Figure 5 is arrangement state diagrams of a plurality of stretching members as viewed from the top of a first die part according to the present example, and Figures 6 and 7 are operation state diagrams of a stretching part in one example of the present invention.

A pouch forming device (300) related to one example of the present invention is for forming a cup portion (241) in a preforming region (A) of a pouch sheet (200). The preforming region (A) is a partial region of the pouch sheet (200) to be formed into the cup portion (241).

As illustrated in Figure 3, the pouch forming device (300) may comprise a first die part (310) provided with a mold opening (312) and provided so that a pouch sheet (200) is seated for the preforming region (A) to cover the mold opening (312).

The first die part (310) has a first die upper surface (311) and a mold opening (312). The first die upper surface (311) is a portion where the pouch sheet (200) is seated. The mold opening (312) is an opening penetrating the first die upper surface (311) along a height direction (H). The height direction (H) is a direction perpendicular to the first die upper surface (311).

As illustrated in Figure 3, the pouch sheet (200) is mounted on the first die upper surface (311) to cover the mold opening (312). The lower surface (202) of the pouch sheet (200) is exposed to the upper portion of the first die part (310) through the mold opening (312).

Also, the pouch forming device (300) may comprise a first pressurizing part (320) for fixing the pouch sheet (200) to the first die part (310). The first pressurizing part (320) may be a stripper.

In addition, the pouch forming device (300) may comprise a stretching part (330) including a first stretching member (331) provided to pressurize a central region (A1) of the preforming region (A) of the pouch sheet (200) and a second stretching member (333) provided to pressurize a first edge region (A2) surrounding the central region (A1).

As illustrated in Figure 6, the first and second stretching members (331, 333) may be provided to pressurize the central region (A1) and the first edge region (A2), respectively, along different directions (F1, F2) toward the mold opening (312).

The first stretching member (331) is disposed to be capable of entering the mold opening (312) from the lower portion of the first die part (310). The first stretching member (331) is disposed to be capable of entering the central portion of the mold opening (312). The first stretching member (331) is provided to be movable up and down along the height direction (H).

In the first stretching member (331), a portion in contact with the preforming region (A) may be formed as a curved portion. The first stretching member (331) may have a first ball (332a) rotatably disposed at a portion in contact with the preforming region (A).

A first bearing member (332) having the first ball (332a) may be mounted on the upper end of the first stretching member (331). The first stretching member (331) may be disposed such that the first ball (332a) may be in point contact with the center of the central region (A1) on the lower surface of the pouch sheet (200).

When the first stretching member (331) pressurizes the lower surface of the pouch sheet (200) in a first direction (F1), the stress concentrated at the point where the first ball (332a) is in point contact may be dispersed in directions different from the first direction (F1) while the first ball (332a) idles counterclockwise or clockwise in a state in point contact with the lower surface of the pouch sheet (200).

The first stretching member (331) is mounted on a lower support (337a). A first drive part (337) is mounted on the lower support (337a). The first drive part (337) moves the lower support (337a) up or down along the height direction (H), whereby it is possible to adjust a movement direction and a movement distance of the first stretching member (331).

The first drive part (337) may be operated so that the first stretching member (331) enters the mold opening (312) by moving the lower support (337a) in the first direction (F1) from the lower portion of the mold opening (312) toward the upper portion.

Upon operation of the first drive part (337), the first stretching member (331) may enter the mold opening (312) in the first direction (F1) along the height direction (H), and stretch the central region (A1) in contact with the lower surface of the pouch sheet (200) to the upper portion of the mold opening (312).

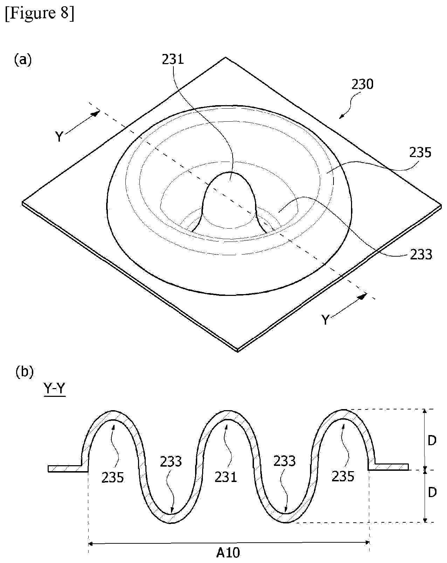

The central region (A1) of the preforming region (A) may be stretched to the upper portion of the mold opening (312) by the force applied by the first stretching member (331) in the first direction (F1). Hereinafter, for the convenience of explanation, a portion where the central region (A1) is curved to the upper portion of the pouch sheet (200) is referred to as a "first annular portion (231, see Figure 8)."

The second stretching member (333) is disposed to be capable of entering the mold opening (312) from the upper portion of the first die part (310). The second stretching member (333) is disposed to be capable of entering the first edge region (A2) of the mold opening (312). The second stretching member (333) is provided to be movable up and down along the height direction (H).

Referring to Figures 4 and 5, the second stretching member (333) is provided to simultaneously pressurize a plurality of first points along the circumferential direction of the first edge region (A2). The first points may be spaced apart from the center of the preforming region (A) by a first radius (r1).

The second stretching member (333) may be provided so that the first imaginary line (L1) connecting the plurality of first points forms a closed curve.

The second stretching member (333) may be provided so that the first imaginary line (L1) connecting the plurality of first points has a circular shape having a radius larger than that of the central region (A1).

The second stretching member (333) may be provided so that the first imaginary line (L1) connecting the plurality of first points has a polygonal shape.

In the second stretching member (333), a portion in contact with the preforming region (A) may be formed as a curved portion.

A second bearing member (334) having the plurality of second balls (334a) may be mounted on the lower end of the second stretching member (333). The second ball (334a) is provided to be rotatable in a portion in contact with the preforming region (A). The second ball (334a) may be in contact with the upper surface (201) of the pouch sheet (200) along the first imaginary line (L1).

The second stretching member (333) may be disposed so that the plurality of second balls (334a) may be in point contact with the first edge region (A2) on the upper surface of the pouch sheet (200) along the first imaginary line.

When the second stretching member (333) pressurizes the upper surface of the pouch sheet (200) in a second direction (F2), the stress concentrated at the point where each of the second balls (334a) is in point contact may be dispersed in directions different from the second direction (F2) while each of the second balls (334a) idles counterclockwise or clockwise in a state in contact with the upper surface of the pouch sheet (200).

The second stretching member (333) is provided so that the plurality of first points is spaced apart from the central region (A1) at a predetermined interval. The second stretching member (333) is provided to surround the first stretching member (331) upon entering the mold opening (312).

The second stretching member (333) is mounted on an upper support (338). A second drive part (339) is mounted on the upper support (338). The second drive part (339) moves the upper support (338) up or down along the height direction (H), whereby it is possible to adjust a movement direction and a movement distance of the second stretching member (333).

The second stretching member (333) is mounted on the upper support (338) to surround the first stretching member (331) upon entering the mold opening (312).

The second drive part (339) may be operated so that the second stretching member (333) enters the mold opening (312) by moving the upper support (338) in the second direction (F2) from the upper portion of the mold opening (312) toward the lower portion.

Upon operation of the second drive part (339), the second stretching member (333) may enter the mold opening (312) in the second direction (F2) along the height direction (H), and stretch the first edge region (A2) in contact with the upper surface of the pouch sheet (200) to the lower portion of the mold opening (312).

The first edge region (A2) of the preforming regions (A) may be stretched to the lower portion of the mold opening (312) by the force applied by the second stretching member (333) in the second direction (F2). Hereinafter, for convenience of explanation, a portion where the first edge region (A2) is curved to the lower portion of the pouch sheet (200) is referred to as a "second annular portion (233, see Figure 8)."

**In** addition, the stretching member (330) may comprise a third stretching member (335) provided to pressurize a second edge region (A3) surrounding the first edge region (A2).

Referring to Figure 3, the third stretching member (335) is disposed to be capable of entering the mold opening (312) from the lower portion of the first die part (310). The third stretching member (335) is disposed to be capable of entering the second edge region (A3) of the mold opening (312). The third stretching member (335) is provided to be movable up and down along the height direction (H).

The second stretching member (333) and the third stretching member (335) may be provided to pressurize the first edge region (A2) and the second edge region (A3), respectively, along different directions (F1, F2) toward the mold opening (312).

Referring to Figures 4 and 5, the third stretching member (335) may be provided to simultaneously pressurize a plurality of second points along the circumferential direction of the second edge region (A3). The second points may be spaced apart from the center of the preforming region (A) by a second radius (r2).

**In** the third stretching member (335), a portion in contact with the preforming region (A) may be formed as a curved portion.

The third stretching member (335) may be provided so that the second imaginary line (L2) connecting the plurality of second points forms a closed curve.

The third stretching member (335) may be provided so that the second imaginary line (L2) connecting the plurality of second points has a circular shape having a radius larger radius than that of the first edge region (A2).

The third stretching member (335) may be provided so that the second imaginary line (L2) connecting the plurality of second points has a polygonal shape.

The second stretching member (333) and the third stretching member (335) may be provided so that the first imaginary line (L1) and the second imaginary line (L2) each have a circular shape.

The second stretching member (333) and the third stretching member (335) may be provided so that the first imaginary line (L1) and the second imaginary line (L2) each have a polygonal shape.

A third bearing member (336) having a plurality of third balls (336a) may be mounted on the upper end of the third stretching member (335). The third balls (336a) may be provided to be rotatable at a portion in contact with the preforming region (A).

The third stretching member (335) may be arranged so that the plurality of third balls (336a) may be in point contact with the second edge region (A3) on the lower surface of the pouch sheet (200) along the second imaginary line (L2).

When the third stretching member (335) pressurizes the lower surface of the pouch sheet (200) in a first direction (F1), the stress concentrated at the point where each of the third balls (336a) is in point contact may be dispersed in directions different from the first direction (F1) while each of the third balls (336a) idles counterclockwise or clockwise in a state in contact with the lower surface of the pouch sheet (200).

The third stretching member (335) is mounted on a lower support (337a). A first drive part (337) is mounted on the lower support (337a). The first drive part (337) moves the lower support (337a) up or down along the height direction (H), whereby it is possible to adjust a movement direction and a movement distance of the third stretching member (335).

The lower support (337a) moves the first and third stretching members (331, 335) together in the same direction. The third stretching member (335) is mounted on the lower support (337a) surrounding the first stretching member (331).

The third stretching member (335) is spaced apart from the first stretching member (331) at a predetermined interval along the width direction (W) of the mold opening (312). The third stretching member (335) may be mounted on the lower support (337a) to be adjacent to the inner surface (313, 314) of the mold opening (312) upon entering the mold opening (312).

The first drive part (337) may be operated so that the third stretching member (335) enters the mold opening (312) by moving the lower support (337a) in the first direction (F1) from the lower portion of the mold opening (312) to the upper portion.

Upon operation of the first drive part (337), the third stretching member (335) may enter the mold opening (312) in the first direction (F1) along the height direction (H), and stretch the second edge region (A3) in contact with the lower surface of the pouch sheet (200) to the upper portion of the mold opening (312).

The second edge region (A3) of the preforming region (A) may be stretched to the upper portion of the mold opening (312) by the force applied by the first stretching member (331) in the first direction (F1). Hereinafter, for the convenience of explanation, a portion where the second edge region (A3) is curved to the upper portion of the pouch sheet (200) is referred to as a "third annular portion (235, see Figure 8)."

In addition, the pouch forming device (300) may comprise a control part (340) provided to control movement of the first to third stretching members (331, 333, 335). The control part (340) controls operation of the first and second drive parts (337, 339).

The control part (340) may be provided so that the first and third stretching members (331, 335) simultaneously pressurize the preforming region (A). The control part (340) may be provided so that the first to third stretching members (331, 333, 335) simultaneously pressurize the preforming region (A).

Upon stretching operation of the pouch sheet (200), the control part (340) may operate the first drive part (337) so that the lower support (337a) moves in the first direction (F1) by the forming depth (D), and may operate the second drive part (339) so that the upper support (338) moves in the second direction (F2) by the forming depth (D).

As described above, upon operation of the first drive part (337), the lower support (337a) moves in the first direction (F1). The first and third stretching members (331, 335) may stretch the central region (A1) and the second edge region (A3) of the preforming region (A) to the upper portion of the mold opening (312) while moving in the first direction (F1) together with the lower support (337a).

Upon operation of the second drive part (339), the upper support (338) moves in the second direction (F2). The second stretching member (333) may stretch the first edge region (A2) of the preforming region (A) to the lower portion of the mold opening (312) while moving in the second direction (F2) together with the upper support (338). The first edge region (A2) is the region between the central region (A1) and the second edge region (A3).

The second stretching member (333) pressurizes the upper surface and the lower surface of the pouch sheet (200) in different directions (F1, F2) together with the first and third stretching members (331, 335).

Figure 8(a) is a perspective diagram of a primarily stretched pouch according to one example of the present invention, and Figure 8(b) is a Y-Y cross-sectional diagram of Figure 8(a).

By such a process, referring to Figure 8, in the primarily stretched preforming region (A10), the central region (A1) and the second edge region (A3) are stretched to the upper portion of the pouch sheet (200) and formed into a first annular portion (231) and a third annular portion (235), and the first edge region (A2) is stretched to the lower portion of the pouch sheet (200) to have a second annular portion (233).

The second annular portion (233) is extended along the height direction (H) to the lower portion of the first annular portion (231) and the third annular portion (235), and is provided to connect the first annular portion (231) and the third annular portion (235) in a curved manner.

The first to third annular portions (231, 233, 235) may have an annular shape having a circular cross-section or a polygonal cross-section depending on the shape of the first to third stretching members (331, 333, 335).

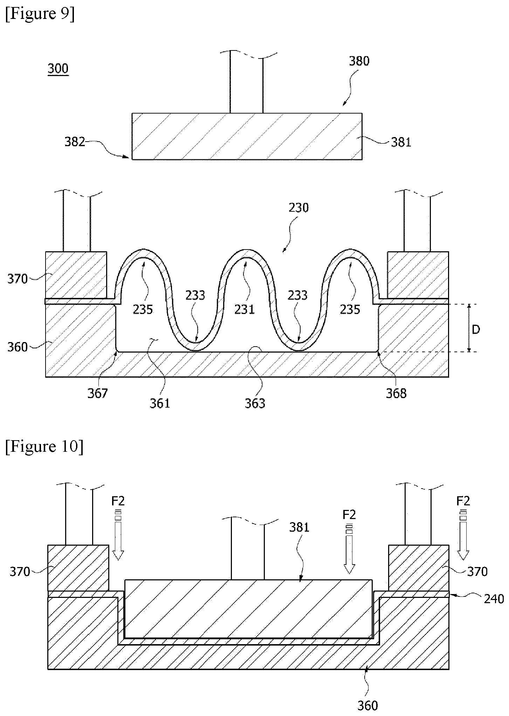

Figures 9 and 10 are diagrams for explaining a process of forming a primarily stretched pouch into a pouch provided with a cup portion, where Figure 9 is an arrangement state diagram of a second die part, a second pressurizing part, and a punching part, and Figure 10 is an operation state diagram of a punching part in which a punching block of the punching part is inserted into a mold groove of the second die part.

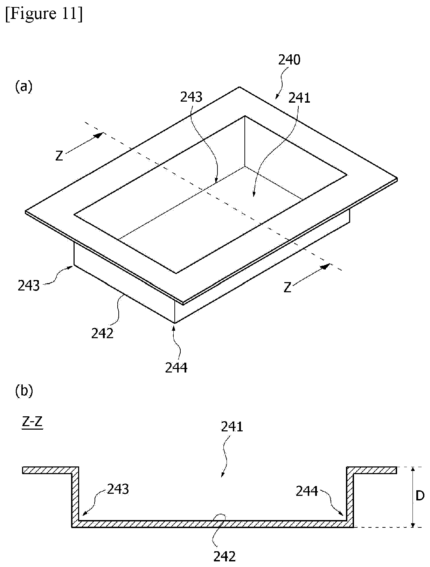

As shown in Figures 9 and 10, the pouch forming device (300) may comprise a second die part (360), a second pressurizing part (370), and a punching part (380), to form a pouch (230), in which the preforming region (A) is primarily stretched, into a pouch (240, see Figure 11) provided with a cup portion (241).

As one example, the pouch (230) in which the preforming region (A) is primarily stretched may be transferred to the second die part (360) through a transfer part such as a gripper and/or a conveyor.

The second die part (360) has a mold groove (361) having a forming depth (D).

The mold groove (361) is provided to enable a main preforming region (A10), in which the preforming region (A) is primarily stretched, to be seated. The first annular portion (231), the second annular portion (233), and the third annular portion (235) are provided in the main preforming region (A10).

As shown in Figure 9, the primarily stretched pouch (230) may be seated on the mold groove (361) so that the second annular portion (233) is placed on the groove bottom surface (363), and the first annular portion (231) and the third annular portion (235) are exposed to the upper portion of the mold groove (361). The primarily stretched pouch (230) is in a state where the first annular portion (231), the second annular portion (233), and the third annular portion (235) are stretched to a uniform thickness.

The second pressurizing part (370) is for fixing the primarily stretched pouch (230) to the second die part (360). The second pressurizing part (370) may be a stripper.

The punching part (380) comprises a punching block (381) provided to be insertable into the mold groove (361). The punching block (381) is provided to stretch the first annular portion (231), the second annular portion (233), and the third annular portion (235) into the mold groove (361).

As shown in Figure 10, the punching block (381) is inserted into the mold groove (361) while moving in the second direction (F2) close to the mold groove (361) and simultaneously pressurizing the first annular portion (231) and the third annular portion (235) exposed to the upper portion of the mold groove (361). Then, the punching block (381) pressurizes the second annular portion (233) to the groove bottom surface (363).

Figure 11(a) is a perspective diagram of a pouch provided with a cup portion according to one example of the present invention, and Figure 11(b) is a Z-Z cross-sectional diagram of Figure 11(a).

The primarily stretched pouch (230) may be formed into a pouch (240, see Figure 11) provided with a cup portion (241). As shown in Figure 11, the cup portion (241, see Figure 11) is provided with a cup bottom surface (242) and cup corner portions (243, 244).

The cup bottom surface (242) is a portion where the first and second annular portions (231, 233) are stretched to be in contact with the groove bottom surface (363). The cup corner portions (243, 244) are portions where the third annular portion (235) is stretched to be in contact with the groove corner portions (367, 368) of the mold groove (361). The cup corner portions (243, 244) are portions connecting the inner surfaces of the cup portion (241, see Figure 11) extending in the height direction (H) from the cup bottom surface (242).

Conventionally, a punching block (30, see Figure 1) extends a preforming region (A) in a flat state to the mold groove (161). Accordingly, stress is conventionally concentrated on the cup corner portions (4, 5) in contact with the block corner portions (34, 35) of the punching block (30, see Figure 1), so that the cup corner portions (4, 5, see Figure 2) are excessively stretched compared to the cup bottom surface (3, see Figure 2), and the cup corner portions (4, 5, see Figure 2) are formed to have a thickness thinner than the thickness of the cup bottom surface (3, see Figure 2).

As shown in Figure 2, the conventional cup portion (2, see Figure 2) had problems such as crack occurrence in the cup corner portions (4, 5) or breakage of the cup corner portions (4, 5) as the cup corner portions (4, 5) were formed to have a thickness thinner than that of the cup bottom surface (3). Such damage to the cup portion (2) can cause secondary problems such as leakage of the electrolyte or explosion of the battery cell due to leakage of the electrolyte.

In contrast, the present invention is composed of primarily stretching the preforming region (A) in a curved manner and forming the primarily stretched preforming region (A) into a cup portion (241, see Figure 11). Accordingly, when the punching block (381) pressurizes the primarily stretched preforming region (A) into the mold groove (361), the stress concentration on the cup corner portions (243, 244) where the block corner portions (382) of the punching block (381) come into contact can be relieved, and as a result, the cup corner portions (243, 244) and the cup bottom surface (242) can be formed to have a uniform thickness.

As a result, the present invention can prevent damage to the cup portion (241, see Figure 11) during the pouch manufacturing process, and prevent secondary problems such as leakage of the electrolyte caused by damage to the cup portion (241, see Figure 11) and/or explosion of the battery cell due to leakage of the electrolyte.

The preferred examples of the present invention as described above have been disclosed for illustrative purposes, and those skilled in the art having ordinary knowledge of the present invention will be able to make various modifications, changes, and additions within the scope of the present invention, and such modifications, changes, and additions should be regarded as falling within the scope of the following claims.

### Industrial Applicability

According to the pouch forming device related to one example of the present invention, it is possible to form the cup portion by primarily stretching the preforming region of the pouch sheet, and then secondarily stretching the primarily stretched preforming region.

## Claims

1. A pouch forming device (300) for forming a cup portion (241) in a preforming region (A) of a pouch sheet (200), comprising:
a first die part (310) provided with a mold opening (312) and provided so that the pouch sheet (200) is seated for the preforming region (A) to cover the mold opening (312);
a first pressurizing part (320) for fixing the pouch sheet (200) on the first die part (310); and
a stretching part (330) including a first stretching member (331) provided to pressurize a central region (A1) of the preforming region (A) of the pouch sheet (200), and a second stretching member (333) provided to pressurize a first edge region (A2) surrounding the central region (A1),
the first (331) and second (333) stretching members are provided to pressurize the central region (A1) and the first edge region (A2), respectively, along different directions (F1, F2) toward the mold opening (312), the device being **characterized in that**
the second stretching member (333) is provided to simultaneously pressurize a plurality of first points along the circumferential direction of the first edge region (A2), and
the second stretching member (333) is provided such that the plurality of first points is spaced apart from the central region (A1) at a predetermined interval.

2. The pouch forming device (300) according to claim 1, wherein
the second stretching member (333) is provided such that a first imaginary line (L1)connecting the plurality of first points forms a closed curve.

3. The pouch forming device (300) according to claim 1, wherein
the second stretching member (333) is provided such that a first imaginary line (L1) connecting the plurality of first points has a circular shape having a radius larger than that of the central region (A1).

4. The pouch forming device (300) according to claim 1, wherein
the second stretching member (333) is provided such that a first imaginary line (L1) connecting the plurality of first points has a polygonal shape.

5. The pouch forming device (300) according to claim 1, wherein
the stretching part (330) further comprises a third stretching member (335) provided to pressurize a second edge region (A3) surrounding the first edge region (A2), and
the second stretching member (333) and the third stretching member (335) are provided to pressurize the first edge region (A2) and the second edge region (A3), respectively, along different directions (F1, F2) toward the mold opening (312).

6. The pouch forming device (300) according to claim 5, wherein
the third stretching member (335) is provided to simultaneously pressurize a plurality of second points along the circumferential direction of the second edge region (A3).

7. The pouch forming device (300) according to claim 6, wherein
the third stretching member (335) is provided such that a second imaginary line (L2) connecting the plurality of second points forms a closed curve.

8. The pouch forming device (300) according to claim 6, wherein
the third stretching member (335) is provided such that a second imaginary line (L2) connecting the plurality of second points has a circular shape having a radius larger than that of the first edge region (A2).

9. The pouch forming device (300) according to claim 6, wherein
the third stretching member (335) is provided such that a second imaginary line (L2) connecting the plurality of second points has a polygonal shape.

10. The pouch forming device (300) according to claim 5, further comprising
a control part (340) provided to control movement of the first to third stretching members (331, 333, 335), wherein
the control part (340) is provided so that the first (331) and third (335) stretching members simultaneously pressurize the preforming region (A).

11. The pouch forming device (300) according to claim 10, wherein
the control part (340) is provided so that the first to third stretching members (331, 333, 335) simultaneously pressurize the preforming region.

12. The pouch forming device (300) according to claim 5, wherein
in the first to third stretching members (331, 333, 335), portions in contact with the preforming region (A) are formed as curved portions.

13. The pouch forming device (300) according to claim 5, wherein
the first to third stretching members (331, 333, 335) have balls (332a, 334a, 336a) rotatably disposed at portions in contact with the preforming region (A).

14. The pouch forming device (300) according to claim 1, comprising:
a second die part (360) provided with a mold groove (361) where the preforming region completely formed through the stretching part (330) is seated;
a second pressurizing part (370) for fixing the pouch sheet seated in the second die part (360); and
a punching block (381) provided to be insertable into the mold groove (361), and further comprising a punching part (380) provided to stretch the preforming region into the mold groove (361).

## Patentansprüche

1. Pouch-Formvorrichtung (300) zum Formen eines Muldenabschnitts (241) in einem Vorformbereich (A) einer Pouch-Folie (200), umfassend:
ein erstes Formteil (310), das mit einer Formöffnung (312) versehen und so vorgesehen ist, dass die Pouch-Folie (200) für den Vorformbereich (A) anliegt, um die Formöffnung (312) zu bedecken;
ein erstes Druckbeaufschlagungsteil (320) zum Fixieren der Pouch-Folie (200) auf dem ersten Formteil (310); und
ein Streckteil (330) mit einem ersten Streckelement (331), das vorgesehen ist, um einen Zentralbereich (A1) des Vorformbereichs (A) der Pouch-Folie (200) mit Druck zu beaufschlagen, und mit einem zweiten Streckelement (333), das vorgesehen ist, um einen ersten Randbereich (A2), der den Zentralbereich (A1) umgibt, mit Druck zu beaufschlagen,
wobei das erste (331) und das zweite (333) Streckelement vorgesehen sind, um den Zentralbereich (A1) bzw. den ersten Randbereich (A2) entlang unterschiedlicher Richtungen (F1, F2) in Richtung der Formöffnung (312) mit Druck zu beaufschlagen, wobei die Vorrichtung **dadurch gekennzeichnet ist, dass**
das zweite Streckelement (333) vorgesehen ist, um eine Vielzahl von ersten Punkten entlang der Umfangsrichtung des ersten Randbereichs (A2) gleichzeitig mit Druck zu beaufschlagen, und
das zweite Streckelement (333) so vorgesehen ist, dass die Vielzahl von ersten Punkten von dem Zentralbereich (A1) in einem vorbestimmten Abstand beabstandet ist.

2. Pouch-Formvorrichtung (300) nach Anspruch 1, wobei
das zweite Streckelement (333) so vorgesehen ist, dass eine erste imaginäre Linie (L1), welche die Vielzahl von ersten Punkten verbindet, eine geschlossene Kurve bildet.

3. Pouch-Formvorrichtung (300) nach Anspruch 1, wobei
das zweite Streckelement (333) so vorgesehen ist, dass eine erste imaginäre Linie (L1), welche die Vielzahl von ersten Punkten verbindet, eine kreisförmige Form mit einem Radius aufweist, der größer ist als derjenige des Zentralbereichs (A1).

4. Pouch-Formvorrichtung (300) nach Anspruch 1, wobei
das zweite Streckelement (333) so vorgesehen ist, dass eine erste imaginäre Linie (L1), welche die Vielzahl von ersten Punkten verbindet, eine polygonale Form aufweist.

5. Pouch-Formvorrichtung (300) nach Anspruch 1, wobei
das Streckteil (330) ferner ein drittes Streckelement (335) umfasst, das vorgesehen ist, um einen den ersten Randbereich (A2) umgebenden zweiten Randbereich (A3) mit Druck zu beaufschlagen, und
das zweite Streckelement (333) und das dritte Streckelement (335) vorgesehen sind, um den ersten Randbereich (A2) bzw. den zweiten Randbereich (A3) entlang unterschiedlicher Richtungen (F1, F2) in Richtung der Formöffnung (312) mit Druck zu beaufschlagen.

6. Pouch-Formvorrichtung (300) nach Anspruch 5, wobei
das dritte Streckelement (335) vorgesehen ist, um eine Vielzahl von zweiten Punkten entlang der Umfangsrichtung des zweiten Randbereichs (A3) gleichzeitig mit Druck zu beaufschlagen.

7. Pouch-Formvorrichtung (300) nach Anspruch 6, wobei
das dritte Streckelement (335) so vorgesehen ist, dass eine zweite imaginäre Linie (L2), welche die Vielzahl von zweiten Punkten verbindet, eine geschlossene Kurve bildet.

8. Pouch-Formvorrichtung (300) nach Anspruch 6, wobei
das dritte Streckelement (335) so vorgesehen ist, dass eine zweite imaginäre Linie (L2), welche die Vielzahl von zweiten Punkten verbindet, eine kreisförmige Form mit einem Radius aufweist, der größer ist als derjenige des ersten Randbereichs (A2).

9. Pouch-Formvorrichtung (300) nach Anspruch 6, wobei
das dritte Streckelement (335) so vorgesehen ist, dass eine zweite imaginäre Linie (L2), welche die Vielzahl von zweiten Punkten verbindet, eine polygonale Form aufweist.

10. Pouch-Formvorrichtung (300) nach Anspruch 5, ferner umfassend
ein Steuerteil (340), das vorgesehen ist, um die Bewegung des ersten bis dritten Streckelements (331, 333, 335) zu steuern, wobei
das Steuerteil (340) so vorgesehen ist, dass das erste (331) und das dritte (335) Streckelement den Vorformbereich (A) gleichzeitig mit Druck beaufschlagen.

11. Pouch-Formvorrichtung (300) nach Anspruch 10, wobei
das Steuerteil (340) so vorgesehen ist, dass das erste bis dritte Streckelement (331, 333, 335) den Vorformbereich gleichzeitig mit Druck beaufschlagen.

12. Pouch-Formvorrichtung (300) nach Anspruch 5, wobei
in dem ersten bis dritten Streckelement (331, 333, 335) Abschnitte, die mit dem Vorformbereich (A) in Kontakt stehen, als gekrümmte Abschnitte ausgebildet sind.

13. Pouch-Formvorrichtung (300) nach Anspruch 5, wobei
das erste bis dritte Streckelement (331, 333, 335) Kugeln (332a, 334a, 336a) aufweisen, die an mit dem Vorformbereich (A) in Kontakt stehenden Abschnitten drehbar angeordnet sind.

14. Pouch-Formvorrichtung (300) nach Anspruch 1, umfassend:
ein zweites Formteil (360), das mit einer Formnut (361) an der Stelle versehen ist, wo der durch das Streckteil (330) vollständig ausgebildete Vorformbereich anliegt;
ein zweites Druckbeaufschlagungsteil (370) zum Fixieren der in dem zweiten Formteil (360) einliegenden Pouch-Folie; und
einen Stanzblock (381), der vorgesehen ist, um in die Formnut (361) eingeführt zu werden,
ferner umfassend ein Stanzteil (380), das vorgesehen ist, um den Vorformbereich in die Formnut (361) zu strecken.

## Revendications

1. Dispositif de formage de poche (300) pour former une partie en cuvette (241) dans une zone de préformage (A) d'une feuille de poche (200), comprenant :
une première partie de matrice (310) pourvue d'une ouverture de moule (312) et prévue de sorte que la feuille de poche (200) soit placée de telle sorte que la zone de préformage (A) couvre l'ouverture de moule (312) ;
une première partie de mise sous pression (320) pour la fixation de la feuille de poche (200) sur la première partie de matrice (310) ; et
une partie d'étirage (330) incluant un premier élément d'étirage (331) prévu pour mettre sous pression une zone centrale (A1) de la zone de préformage (A) de la feuille de poche (200), et un deuxième élément d'étirage (333) prévu pour mettre sous pression une première zone de bord (A2) entourant la zone centrale (A1),
les premier (331) et deuxième (333) éléments d'étirage sont prévus pour mettre sous pression la zone centrale (A1) et la première zone de bord (A2), respectivement, le long de directions différentes (F1, F2) vers l'ouverture de moule (312), le dispositif étant **caractérisé en ce que**
le deuxième élément d'étirage (333) est prévu pour mettre sous pression simultanément une pluralité de premiers points le long de la direction circonférentielle de la première zone de bord (A2), et
le deuxième élément d'étirage (333) est prévu de telle sorte que la pluralité de premiers points est espacée de la zone centrale (A1) à un intervalle prédéterminé.

2. Le dispositif de formage de poche (300) selon la revendication 1, dans lequel
le deuxième élément d'étirage (333) est prévu de telle sorte qu'une première ligne imaginaire (L1) reliant la pluralité de premiers points forme une courbe fermée.

3. Le dispositif de formage de poche (300) selon la revendication 1, dans lequel
le deuxième élément d'étirage (333) est prévu de telle sorte qu'une première ligne imaginaire (L1) reliant la pluralité de premiers points a une forme circulaire ayant un rayon plus grand que celui de la zone centrale (A1).

4. Le dispositif de formage de poche (300) selon la revendication 1, dans lequel
le deuxième élément d'étirage (333) est prévu de telle sorte qu'une première ligne imaginaire (L1) reliant la pluralité de premiers points a une forme polygonale.

5. Le dispositif de formage de poche (300) selon la revendication 1, dans lequel
la partie d'étirage (330) comprend en outre un troisième élément d'étirage (335) prévu pour mettre sous pression une deuxième zone de bord (A3) entourant la première zone de bord (A2), et
le deuxième élément d'étirage (333) et le troisième élément d'étirage (335) sont prévus pour mettre sous pression la première zone de bord (A2) et la deuxième zone de bord (A3), respectivement, le long de directions différentes (F1, F2) vers l'ouverture de moule (312).

6. Le dispositif de formage de poche (300) selon la revendication 5, dans lequel
le troisième élément d'étirage (335) est prévu pour mettre sous pression simultanément une pluralité de seconds points le long de la direction circonférentielle de la deuxième zone de bord (A3).

7. Le dispositif de formage de poche (300) selon la revendication 6, dans lequel
le troisième élément d'étirage (335) est prévu de telle sorte qu'une deuxième ligne imaginaire (L2) reliant la pluralité de seconds points forme une courbe fermée.

8. Le dispositif de formage de poche (300) selon la revendication 6, dans lequel
le troisième élément d'étirage (335) est prévu de telle sorte qu'une deuxième ligne imaginaire (L2) reliant la pluralité de seconds points a une forme circulaire ayant un rayon plus grand que celui de la première zone de bord (A2).

9. Le dispositif de formage de poche (300) selon la revendication 6, dans lequel
le troisième élément d'étirage (335) est prévu de telle sorte qu'une deuxième ligne imaginaire (L2) reliant la pluralité de seconds points a une forme polygonale.

10. Le dispositif de formage de poche (300) selon la revendication 5, comprenant en outre
une partie de commande (340) prévue pour commander le mouvement des premier au troisième éléments d'étirage (331, 333, 335), dans lequel
la partie de commande (340) est prévue de sorte que les premier (331) et troisième (335) éléments d'étirage mettent sous pression simultanément la zone de préformage (A).

11. Le dispositif de formage de poche (300) selon la revendication 10, dans lequel
la partie de commande (340) est prévue de sorte que les premier au troisième éléments d'étirage (331, 333, 335) mettent sous pression simultanément la zone de préformage.

12. Le dispositif de formage de poche (300) selon la revendication 5, dans lequel
dans les premier au troisième éléments d'étirage (331, 333, 335), des parties en contact avec la zone de préformage (A) sont formées sous forme de parties incurvées.

13. Le dispositif de formage de poche (300) selon la revendication 5, dans lequel
les premier au troisième éléments d'étirage (331, 333, 335) comportent des billes (332a, 334a, 336a) disposées de manière rotative au niveau de parties en contact avec la zone de préformage (A).

14. Le dispositif de formage de poche (300) selon la revendication 1, comprenant :
une deuxième partie de matrice (360) pourvue d'une rainure de moule (361) dans laquelle la zone de préformage complètement formée par la partie d'étirage (330) est placée ;
une deuxième partie de mise sous pression (370) pour la fixation de la feuille de poche placée dans la deuxième partie de matrice (360) ; et
un bloc de poinçonnage (381) prévu pour être insérable dans la rainure de moule (361), et comprenant en outre une partie de poinçonnage (380) prévue pour étirer la zone de préformage dans la rainure de moule (361).
